# EUROPÄISCHE PATENTSCHRIFT

(11) **EP 2 548 242 B1**
(45) Veröffentlichungstag und Bekanntmachung des Hinweises auf die Patenterteilung: **11.03.2020**
(21) Anmeldenummer: 11700682.5
(22) Anmeldetag: 24.01.2011
(51) Int. Cl.: H01M 2/20, H01M 10/052, B23K 1/00, B23K 20/10, B23K 31/02, B23K 101/36

(54) **BATTERIEKONTAKTIERUNG ÜBER ANGEPASSTE ZWEISTOFF-VERBINDUNGSELEMENTE**
BATTERY CONTACT VIA ADAPTED TWO-COMPONENT CONNECTING ELEMENTS
MISE EN CONTACT DE BATTERIE AU MOYEN D'ÉLÉMENTS DE CONNEXION BINAIRES ADAPTÉS

(30) Priorität: 17.03.2010 DE 102010002938
(43) Veröffentlichungstag der Anmeldung: 23.01.2013
(73) Patentinhaber: Robert Bosch GmbH, 70442 Stuttgart (DE)
(72) Erfinder: SCHMITZ, Godehard, 74372 Sersheim (DE); RAMSAYER, Reiner, 71701 Schwieberdingen (DE)
(86) Internationale Anmeldenummer: PCT/EP2011/050881
(87) Internationale Veröffentlichungsnummer: WO 2011/113633

(56) Entgegenhaltungen:
- EP-A2- 1 160 893
- WO-A1-2008/152482
- JP-A- 2002 151 045
- US-A1- 2005 100 785

## Beschreibung

### Stand der Technik

Im Bereich der Kontaktierung von Batterien, beispielsweise Li-Ionen-Batterien in Fahrzeugen, müssen hohe Ströme übertragen werden. Dies erfordert zum einen hohe Querschnitte der Leitungsträger und zum anderen, besonders für den Einsatz in der Automobilfertigung, hohe Zuverlässigkeit, mechanische Festigkeit und eine dauerstabile Verbindungstechnik der Batteriekontaktierungen.

Bei der Kontaktierung der Batterie-Zellen zu einem sogenannten Stack müssen die Anoden und Kathoden der Einzelzellen verbunden werden. Dabei ist bei einer Li-Ionen-Batterie typischerweise einer der Anschlüsse aus einem Aluminiumwerkstoff und der andere Anschluss typischerweise aus einem Kupferwerkstoff gefertigt. Die Zellen werden über Aluminium- oder Kupferblechstreifen, sogenannte Verbinder, miteinander kontaktiert und zu einem Stack verbunden. Um möglichst gute Übergangswiderstände an den Kontaktstellen zu erreichen, werden stoffschlüssige Verbindungstechniken, beziehungsweise Fügetechniken, bevorzugt.

So bezieht sich WO 2006/016441 A1 auf eine Batterieanordnung, bei der dünne Metallplatten punktgeschweißt werden. An den dünn ausgebildeten Metallplatten werden durch Laserverschweißen verschiedene Schmelzpunkte erzeugt, wobei das metallische Material, aus dem die Metallplatten gefertigt sind, einen relativ niedrigen Schmelzpunkt aufweist. Die metallischen Platten sind aus Aluminium oder aus Kupfer gefertigt. Die metallischen Platten bilden eine Anordnung im Wesentlichen in laminarer Struktur. Sie sind in Stapelform angeordnet und bilden eine Batterieanordnung als Stapel.

Die EP 1160893 A2 und die US 2005/100785 A1 offenbaren eine Lithium-Sekundärzelle mit einem Zellverbinder aus Aluminium und Kupfer,

Die WO 2008/152482 A1 offenbart eine Batteriezelle mit Elektrodenanschlüssen, welche durch ein Isolationselement geführt sind.

Die JP 2002151045 A offenbart einen gewundenen Batterieverbinder aus Aluminium und Kupfer.

Beispielsweise offenbart JP 2008-226519 A eine Batterieanordnung, die eine Anzahl von quaderförmigen Zellen aufweist. Die Anzahl quaderförmig ausgebildeter Zellen sind mit einem Positivelektrodenanschluss und einem Negativelektrodenanschluss ausgestattet, wobei die einzelnen Zellen in Reihe geschaltet sind. Der positive Elektrodenanschluss einer Zelle ist jeweils mit dem negativen Elektrodenanschluss an der anderen Zelle über Laserschweißen verbunden. Jede der Batteriezellen umfasst ein Sicherheitsventil, das auf der gegenüberliegenden Seite der Batteriezelle angeordnet ist.

Sollen die Verbinder über einen Schweißprozess gefügt werden, so ist einer der beiden Batteriekontakte immer als artungsgleiche Verbindung Al-Cu auszuführen.

Dies führt zu größeren Problemen, da die Werkstoffe Aluminium und Kupfer nur bedingt schweißgeeignet sind, da sie stark abweichende physikalische Eigenschaften aufweisen (Wärmeausdehnungskoeffizienten, Schmelz- und Verdampfungstemperaturen, Absorptionsgrade für die Laserwellenlänge,...).

Des Weiteren sind Kupfer und Aluminium auch von der Metallurgie her nicht in beliebigen Verhältnissen ineinander mischbar, so dass bei ungünstiger Prozessführung Risse im Schweißgefüge entstehen können. Dies schädigt die Verbindungsstelle und führt zu einem frühzeitigen Versagen der Kontaktierung.

Aktuell werden die Zellen beispielsweise mangels geeigneter Fügeverfahren verschraubt. Jedoch sind diese Verbindungstechniken nicht ausreichend dauerstabil und die Übergangswiderstände sind zu hoch, was zu Verlusten und/oder zu ungewünschten Erwärmungen der Kontaktstellen führen kann.

### Offenbarung der Erfindung

Ziel ist es, daß an den Kontaktierstellen Anschlusspin-Verbinder nur artgleiche Verbindungen, beispielsweise Al-Al und Cu-Cu, hergestellt werden müssen. Diese Verbindungen werden dann mit Verfahren (Laserschweißen, Widerstandsschweißen, Elektronenstrahlschweißen) hergestellt.

Erfindungsgemäss wird ein Batteriestack mit Einzel-Batteriezellen und einem Verbinder zur Batteriekontaktierung gemäss Anspruch 1 sowie ein Verbinder zur Batteriekontaktierung gemäss Anspruch 6 bereitgestellt, der an den beiden Kontaktstellen den passenden Fügewerkstoff umfasst. Dies kann beispielsweise durch einen Verbundwerkstoff Aluminium-Kupfer realisiert werden. Als sehr geeignete Verbindung hat sich eine Walzverbindung erwiesen, die unter dem Namen "Cupal" bekannt ist. Cupal ist ein kaltwalzplattierter Verbundwerkstoff zwischen Aluminium als Trägerwerkstoff und Kupfer als Auflagenwerkstoff. Durch Verwendung eines solchen Verbundwerkstoffes, kann der Verbinder zwischen den Zellen für das Kontaktierverfahren optimal angepasst und ausgestaltet werden. Gleichzeitig ist eine kontaktsichere und korrosionsgeschützte Verbindung von Kupfer und Aluminium beziehungsweise Stahl möglich.

Durch die Verwendung von artgleichen Materialien wird ein sehr guter Stoffschluss realisiert, wodurch die Batteriekontaktierung eine große mechanische Festigkeit und eine dauerstabile Verbindungstechnik, und damit eine hohe Zuverlässigkeit besitzt.

Es kann in vorteilhafter Weise eine Schweißverbindung hergestellt werden, die eine Ringnaht aufweist oder eine segmentierte Naht bei rechteckigem Querschnitt darstellt. Die segmentierte Naht hat den Vorteil, dass beim Auftreten von Rissen in der Naht, beispielsweise infolge unzureichender Durchmischung im Schmelzbad, oder aufgrund anderer Prozessstörungen, die Risse nur zum Versagen eines Segments führen können, und die anderen Segmente noch zur Stromübertragung und zur Festigkeitssicherung bereitstehen.

Zum Ausgleich von Toleranzen kann es sinnvoll sein, die eingesetzten Querverbinder nicht über eine Bohrung mit dem Anschlusspin zu verbinden, sondern eine Schlitzgeometrie zu wählen. Diese gleicht Längentoleranzen aus und ist mechanisch nicht überbestimmt.

### Kurze Beschreibung der Zeichnungen

Anhand der Zeichnungen wird die Erfindung nachstehend eingehender beschrieben.

Es zeigen:
- Figur 1: Ausführungen von Querverbindungen zwischen einzelnen Batteriezellen eines Batterie-Packs mittels Verschraubung,
- Figur 2: Verschaltungsaufbau von Einzel-Batteriezellen zu einem Batterie-Stack,
- Figur 3: Verbundwerkstoff gefertigt durch Plattierung von Kupfer auf Aluminium,
- Figur 4: Verschaltungsaufbau mit einem als Zweistoff-Blech gestalteten Zwei-stoff-Verbinder,
- Figur 5: Verschaltungsaufbau mit einem als Sandwich-Blech gestalteten Zwei-stoff-Verbinder nach einer Fräsbearbeitung und
- Figur 6: Verschaltungsaufbau mit einem als Sandwich-Blech gestalteten Zwei-stoff-Verbinder und optimierte Fügegeometrie für einen Schmelz-schweißprozess.

### Ausführungsvarianten

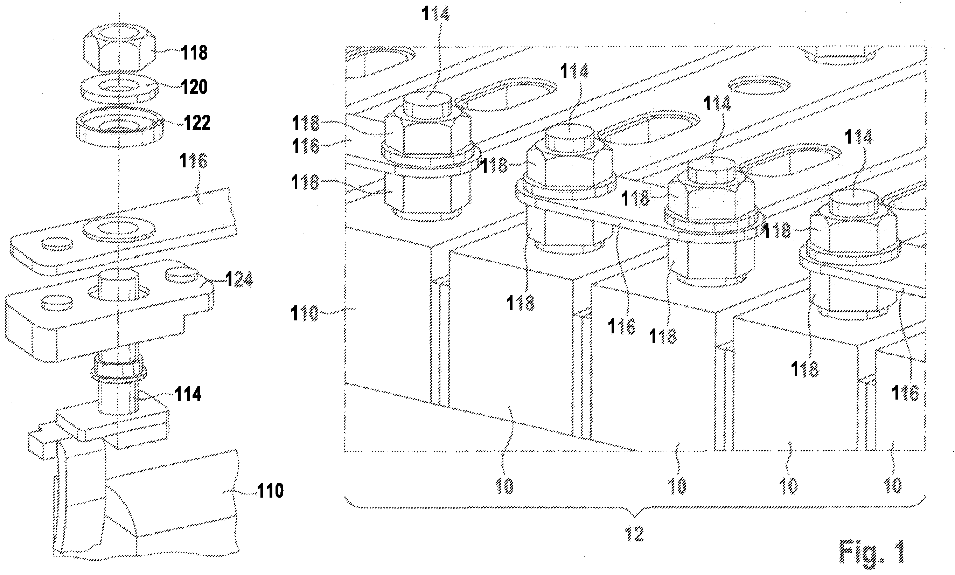

Zur besseren Darstellung eines erfindungsgemäßen Verbinders zur Kontaktierung einer Batterie ist in Figur 1 eine herkömmliche Batteriekontaktierung mittels Verschraubung, wie aus dem Stand der Technik bekannt, gezeigt.

Der Darstellung gemäß Figur 1 ist zu entnehmen, dass eine Anzahl von Batterie-zellen 10 zu einem Batterie-Pack oder Batteriemodul 12 zusammengeschlossen sind. Eine jede der Batteriezellen 10 umfasst einen Anschlussstift 114. Die Anschlussstifte 114 von zwei Batteriezellen 10 sind jeweils über eine als Querverbinder dienende Lasche 116 miteinander verschraubt. Die Verschraubung erfolgt mittels Muttern 118, die auf Außengewinde der Anschlussstifte 114 der einzelnen Batteriezellen 10 aufgeschraubt werden und mittels einer Scheibe 120 auf den Laschen 116 aufliegen. In der ebenfalls in Figur 1 dargestellten Explosionsdarstellung ist gezeigt, dass auf den Anschlussstift 114 zunächst ein Schuh 124 aufgebracht wird, der wiederum die als Querverbinder dienende Lasche 116 abstützt. Auf der Oberseite der Lasche 116 liegt ein Kragen 122 auf, der die Scheibe 120 umfängt, die mittels der Mutter 118 verschraubt wird. Die in Figur 1 dargestellte Verschraubung weist jedoch verschiedene Nachteile auf. Zum einen ist diese Verbindungstechnik nicht ausreichend dauerstabil, daher aufgrund der im Betrieb auftretenden Erschütterungen können sich die Schrauben lösen, selbst wenn sie gegeneinander fest angezogen sind. Des Weiteren ist ein Nachteil dieser Lösung die sich einstellenden hohen Übergangswiderstände, was zu Verlusten und/oder zu unerwünschten Erwärmungen im Bereich der Kontaktstellen führen kann. Die Werkstoffe insbesondere Kupfer, relaxieren mit der Zeit. Dies bedeutet, dass die Vorspannkraft einer Schraube mit der Zeit abnimmt wodurch sich der Übergangswiderstand erheblich verschlechtert.

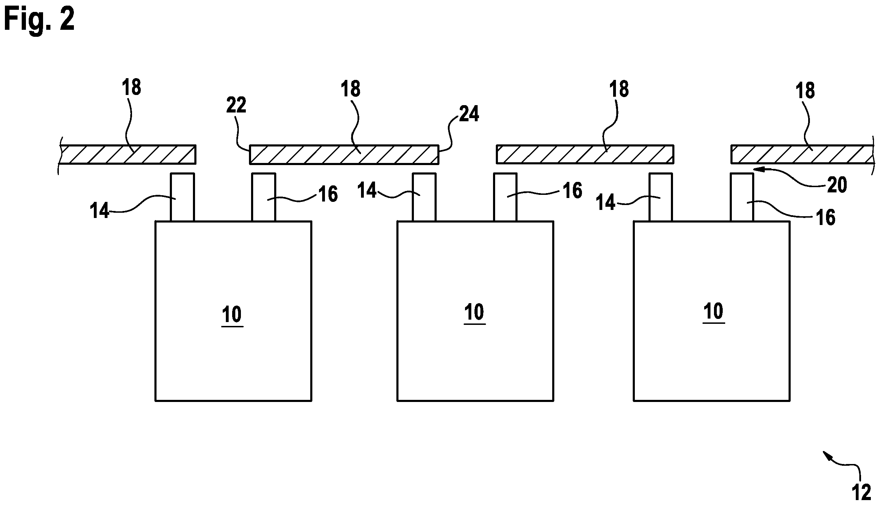

Zur besseren Verdeutlichung der erfindungsgemäßen Batteriekontaktierung ist in Figur 2 ein stoffschlüssiger Verschaltungsaufbau von Einzel-Batteriezellen 10 zu einem Batterie-Stack 12 dargestellt.

Jede Batteriezelle 10 besitzt einen Anschlusspin 14, gefertigt aus Material A, beispielsweise Aluminium, und einen Anschlusspin 16, gefertigt aus Material B, beispielsweise Kupfer.

Jeder Anschlusspin 16 einer Batteriezelle 10 wird mittels eines Verbinders 18 mit dem Anschlusspin 14 der benachbarten Batteriezelle 10 vorzugsweise stoffschlüssig kontaktiert. Dieser Anschlusspin-Verbinder-Kontakt 20 dient als Kontaktstelle, wodurch die einzelnen Batteriezellen 10 elektrisch verbunden werden und ein funktionstüchtiger Batterie-Stack 12 erhalten wird.

Es kann in vorteilhafter Weise eine Schweißverbindung hergestellt werden, die eine Ringnaht aufweist oder eine segmentierte Naht bei rechteckigem Querschnitt darstellt. Die segmentierte Naht hat den Vorteil, dass beim Auftreten von Rissen in der Naht, beispielsweise infolge unzureichender Durchmischung im Schmelzbad, oder aufgrund anderer Prozessstörungen, die Risse nur zum Versagen eines Segments führen können, und die anderen Segmente noch zur Stromübertragung und zur Festigkeitssicherung bereitstehen.

Zum Ausgleich von Toleranzen kann es sinnvoll sein, die eingesetzten Querverbinder nicht über eine Bohrung mit dem Anschlusspin 14, 16 zu verbinden, sondern eine Schlitzgeometrie zu wählen. Diese gleicht Längentoleranzen aus und ist mechanisch nicht überbestimmt.

Der Werkstoff des Verbinders 18 kann frei gewählt werden. Vorzugsweise wird dieser aus Aluminium oder Kupfer hergestellt, da diese Stoffe die geforderten hohen elektrischen Leitfähigkeiten liefern.

Erfindungsgemäß wird ein Verbinder 18 bereitgestellt der an den beiden Kontaktstellen, die sich jeweils an einem Ende 22, 24 des Verbinders 18 befinden, den passenden Fügewerkstoff bereitstellt. Durch Anwendung eines solchen Verbundwerkstoffes, kann der Verbinder 18 zwischen den Batteriezellen 10 für das Kontaktierverfahren optimal angepasst und ausgestaltet werden.

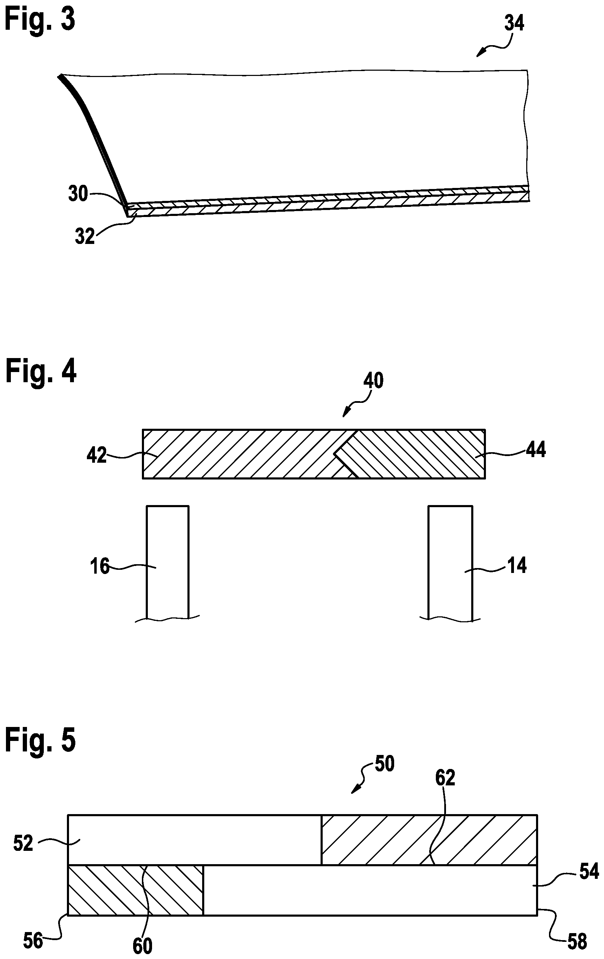

Beispielsweise kann dieser Verbundwerkstoff, wie in Figur 3 dargestellt, durch eine Plattierung von Kupfer 30 auf Aluminium 32 zu einem Zweistoffblech 34 realisiert werden, wobei die beiden Metalle in einem speziellen Verfahren untrennbar miteinander stoffschlüssig gefügt, beispielsweise verschweißt, werden.

Mögliche Ausführungsvarianten eines Batterie-Stacks 12 mit Verbinder 18 zur Batteriekontaktierung umfassen unter anderem einen in Figur 4 dargestellten Zweistoff-Verbinder.

In dieser Ausführungsvariante wird ein Zweistoff-Blech 34 als Ausgangswerkstoff für den Verbinder 18 verwendet. Aus diesem Zweistoff-Blech 34 wird ein Streifen 40 entsprechend der notwendigen Fügegeometrie, die durch die Anschlusspins 16 und 14 von zwei benachbarten Batteriezellen 10 vorgegeben ist, hergestellt.

Die beiden Anschlusspins sind aus unterschiedlichen Materialen gefertigt, in dem dargestellten Beispiel ist Anschlusspin 16 aus Aluminium und Anschlusspin 14 aus Kupfer gefertigt.

Die Batteriezellen 10, welche vorzugsweise baugleich sind, können in beliebiger Anordnung geschaltet sein. Zur Herstellung des elektrischen Kontakts innerhalb des Batteriestacks 12 wird eine Aluminiumseite 42 des Streifens 40 mit dem Anschlusspin 16 und eine Kupferseite 44 mit dem Anschlusspin 14 über ein stoffschlüssiges Fügeverfahren, beispielsweise Schweißen, Ultraschallschweißen, Reibschweißen, Löten, Hartlöten automatisch oder semi-automatisch verbunden. Durch diese artgleiche Schweißverbindung wird ein sehr guter Stoffschluss, mit hoher Kontaktsicherheit und Korrosionsschutz, realisiert der in dieser Qualität zwischen Kupfer und Aluminium nicht zu bewerkstelligen ist.

Eine weitere erfindungsgemässe Ausführungsvariante ist der in Figur 5 dargestellte Sandwich-Verbinder.

In dieser Ausführungsvariante wird ein Blech 50 in Sandwichbauweise für die Batterienkontaktierung verwendet, das mindestens ein Einzelblech 52 aus einem Material A und mindestens ein Einzelblech 54 aus einem Material B umfasst, wobei Material A vorzugsweise Aluminium und Material B vorzugsweise Kupfer ist.

An einem Ende 56 des Blechs 50 wird durch einen spanabhebenden Fertigungsprozess, wie beispielsweise Fräsen, Bohren, Schleifen oder ähnliches, das Material B partiell entfernt und somit Material A zugänglich, wodurch eine Anschlussstelle 60 geschaffen wird.

An einem gegenüberliegenden Ende 58 des Blechs 50 wird ebenfalls durch einen spanabhebenden Fertigungsprozess, wie beispielsweise Fräsen, Bohren, Schleifen oder ähnliches, das Material A partiell entfernt und somit Material B zugänglich, wodurch eine Anschlussstelle 62 geschaffen wird.

Durch diese Ausgestaltung kann das Blech 50 in Sandwich-Bauweise in jeweils artgleicher Verbindung, beispielsweise Al-Al und Cu-Cu, mit dem jeweiligen Anschlusspin 14, 16 der Batteriezelle 10 verschweißt und so die elektrische Kontaktierung hergestellt werden.

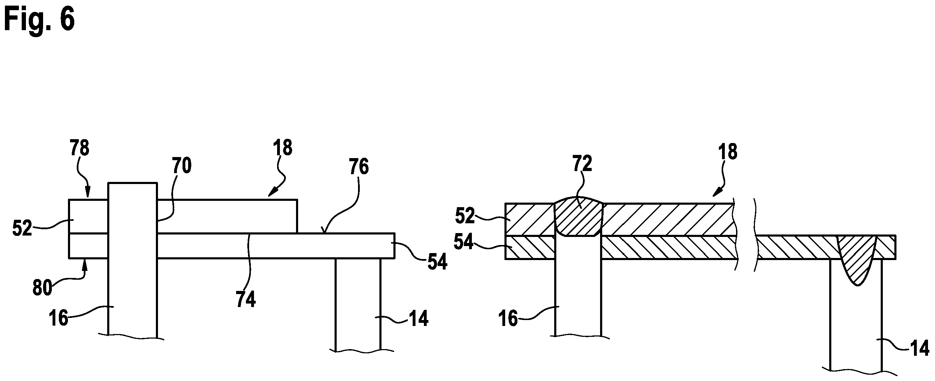

In einer weiteren Ausführungsvariante, dargestellt in Figur 6, kann dieser Sandwich-Verbinder durch einen Schweißprozess optimiert werden.

Wird ein Sandwich-Verbinder, wie in Figur 5 dargestellt, über ein Schmelzschweißverfahren mit dem Anschlusspin 14 oder 16 verbunden, so kann der Verbinder 18 noch weiter optimiert und damit an die Fügegeometrie angepasst werden um den Fügeprozess zu stabilisieren. Dies ist in Figur 6 gezeigt.

Der Verbinder 18 in Sandwich-Bauweise umfasst, wie in dem vorherigen Ausführungsbeispiel, mindestens ein Einzelblech 52 aus Material A und mindestens ein Einzelblech 54 aus Material B, wobei Material A vorzugsweise Aluminium und Material B vorzugsweise Kupfer ist.

In der hier beschriebenen Ausführungsvariante ist der Anschlusspin 16 und das Einzelblech 52 aus dem Material A, vorzugsweise Aluminium, und der Anschlusspin 14 und das Einzelblech 54 aus dem Material B, vorzugsweise Kupfer, gefertigt.

Zur Batteriekontaktierung wird der vorzugsweise runde Anschlusspin 16 der Batteriezelle 10 durch eine vorzugsweise runde Öffnung im Verbinder 18 gesteckt. Andere mögliche Geometrien des Anschlusspins 16 umfassen unter anderem quadratische, rechteckige oder andere polygone Querschnittsflächen.

An dieser Kontaktstelle 70 liegt das Einzelblech 52 auf einer Oberseite 78 des Verbinders 18 und das Einzelblech 54 des Verbinders 18 verbleibt als Schmelzbadsicherung auf einer Unterseite 80 des Verbinders 18 erhalten.

In dieser Variante wird der gefertigte Anschlusspin 16 der Batteriezelle 10 so stark umgeschmolzen dass sich die Werkstoffe der beiden Fügepartner, Anschlusspin 16 und Einzelblech 52, vorzugsweise Aluminium, zu einem gemeinsamen Schmelzbad 72 vereinen.

Besitzt Material A des Einzelbleches 52 einen geringeren Schmelzpunkt als das Material B des darunter liegenden Einzelbleches 54, so bewirkt diese Gestaltung vorteilhafterweise, dass das Schmelzbad 72 nicht nach unten durchsacken kann.

Der Werkstoff aus Material A kann dabei umgeschmolzen werden oder die stoffschlüssige Verbindung zwischen dem Anschlusspin 16 und dem Einzelblech 52 kann entlang der Pin-Kontur als Nahtschweißung, beispielsweise eine Ringnaht, eine segmentierte Naht oder eine U-Naht, ausgeführt sein.

Auf der Oberseite 74 des Einzelblechs 54 aus Material B wird durch einen spanabhebenden Fertigungsprozess, wie beispielsweise Fräsen, Bohren, Schleifen oder ähnliches, das Material A partiell entfernt. Vorzugsweise wird zwischen dem Anschlusspin 14 und der abgetragenen Fläche 76 eine Schweißverbindung im Überlappstoß erzeugt, welche sich vorteilhaft für den Toleranzausgleich erweist.

Die bisher beschriebenen Ausführungsvarianten offenbaren eine Batteriekontaktierung bei der die beiden Anschlusspins 14, 16 aus unterschiedlichen Materialen gefertigt sind und der Verbinder 18 als zweikomponentiger Verbundwerkstoff ausgeführt ist.

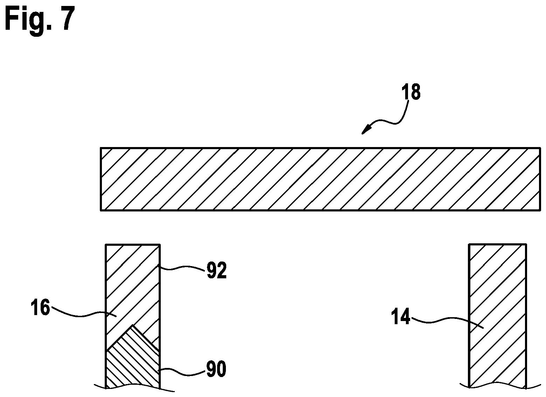

Beispielsweise kann die Batteriekontaktierung, wie in Figur 7 dargestellt, aber auch mit einem herkömmlichen, daher einkomponentigen, Verbinder hergestellt werden, wenn mindestens einer der Anschlusspins 14, 16 aus dem zweikomponentigen Verbundwerkstoff gefertigt ist.

In dieser Ausführungsvariante wird ein Zweistoff-Blech 34 als Ausgangswerkstoff für den mindestens einen Anschlusspin 14, 16 verwendet. Beispielsweise, wie in Figur 7 dargestellt, kann eine Unterseite 90 des Anschlusspins 16 aus dem Material A und eine Oberseite 92 des Anschlusspins 16 aus dem Material B, welches auch das Material des Verbinders 18 ist, gefertigt sein. Durch diese Gestaltung des Anschlusspins 16 kann ebenfalls eine artgleiche Fügeverbindung zwischen dem Anschlusspin 16 und dem Verbinder 18 realisiert werden.

Potential hat diese Verbindung überall dort, wo zwei unterschiedliche Werkstoffe (artungleiche Werkstoffe) verbunden werden müssen, die über konventionelle Schweißverfahren nicht oder nur mit großem Risiko verschweißt werden können. Durch den Zweistoff-Verbinder kann diese artungleiche Schweißverbindung als artgleiche Schweißverbindung ausgeführt werden.

Bei einer artgleichen Schweißverbindung wird ein sehr guter Stoffschluss realisiert, wodurch die Batteriekontaktierung eine große mechanische Festigkeit und eine dauerstabile Verbindungstechnik besitzt. Daher ist die Verbindung zwischen Material A und Material B äußerst kontaktsicher und korrosionsgeschützt und weißt eine hohe Zuverlässigkeit auf.

Zusätzlich kann durch die Verwendung eines solchen Verbundwerkstoffes, der Verbinder zwischen den Batteriezellen 10 für das Kontaktierverfahren optimal angepasst und ausgestaltet werden.

Außerdem ist das Schmelzschweißen von artungleichen Materialien durch die Bildung von intermetallischen Phasen sowie infolge der unterschiedlichen thermischen Ausdehnungskoeffizienten von der Materialien äußerst kritisch. Demgegenüber sind artgleiche Kombinationen wesentlich einfacher schweißtechnisch beherrschbar.

Die Erfindung kann auf verschiedene stoffschlüssige Fügeverfahren, wie beispielsweise Laserschweißen, Widerstandsschweißen, Elektronenstrahlschweißen oder ähnliche Verfahren, übertragen werden. Für jede Verbindung kann der optimale Prozess gewählt werden, so dass an den Verbindungen der einzelnen Batteriezellen 10 auch unterschiedliche Prozesse - je nach Werkstoffpaarung - eingesetzt werden können.

Eingesetzt werden kann das Verfahren beispielsweise bei der Zellkontaktierung von Li-Ionen-Akkus, bei denen artungleiche Verbindungen wie Cu-Al hergestellt werden müssen.

Des Weiteren kann es im Bereich elektrischer Steuergeräte für Hochstromanwendungen zur Kontaktierungen zwischen Aluminium und Kupfer genutzt werden.

## Patentansprüche

1. Batterie-Stack (12) mit Einzel-Batteriezellen (10), welche durch einen Verbinder (18) miteinander verschaltet sind, wobei der als Batteriekontaktierung ausgebildete Verbinder (18) ein Zweistoff-Verbindungselement ist und an jeweils einem Ende (22, 24) des Verbinders (18) einen Fügewerkstoff umfasst, der mit jeweils einem Werkstoff jeweils eines elektrisch zu kontaktierenden Anschlusspins (14, 16) einer Einzel-Batteriezelle identisch ist, wobei der als Batteriekontaktierung ausgebildete Verbinder (18) ein Blech (50) in Sandwichbauweise ist, welches mindestens ein Einzelblech (52) aus Material A und mindestens ein Einzelblech (54) aus Material B umfasst, **dadurch gekennzeichnet, dass** ein Anschlusspin (16) der Batteriezelle (10), gefertigt aus Material A des Einzelblechs (52), durch eine Öffnung im Verbinder (18) gesteckt ist, so dass eine Kontaktstelle (70) gebildet ist und der Anschlusspin (16) und die Kontaktstelle (70) nach einem Umschmelzen ein gemeinsames Schmelzbad (72) bilden, wobei das Einzelblech (54) des Verbinders (18) auf einer Unterseite (80) des Verbinders (18) als Schmelzbadsicherung dient.

2. Batterie-Stack (12) nach Anspruch 1, **dadurch gekennzeichnet, dass** der als Batteriekontaktierung ausgebildete Verbinder (18) aus einem, der Fügegeometrie von mindestens zwei zu verbindenden Einzel-Batteriezellen (10) angepassten, Zweistoffblech (34) gefertigt ist.

3. Batterie-Stack (12) nach Anspruch 1, **dadurch gekennzeichnet, dass** der Werkstoff, aus dem ein Anschlusspin (16) und ein Einzelblech (52) hergestellt sind, umgeschmolzen ist.

4. Batterie-Stack (12) nach Anspruch 1, **dadurch gekennzeichnet, dass** die stoffschlüssige Verbindung zwischen dem Anschlusspin (16) und dem Einzelblech (52) entlang der Pin-Kontur als Nahtschweißung ausgeführt ist.

5. Batterie-Stack (12) nach einem oder mehreren der vorhergehenden Ansprüche, **dadurch gekennzeichnet, dass** zwischen einem Anschlusspin (14) und einer, durch einen spanabhebenden Fertigungsprozess erzeugten, abgetragenen Fläche (76) auf einer Oberseite (74) des Einzelblechs (54) eine Schweißverbindung im Überlappstoß ausgebildet ist.

6. Verbinder (18) zur Kontaktierung einer Batterie (10) oder zur Verschaltung von Einzel-Batteriezellen (10) zu einem Batterie-Stack (12), wobei der als Batteriekontaktierung ausgebildete Verbinder (18) ein Zweistoff-Verbindungselement ist und an jeweils einem Ende (22, 24) des Verbinders (18) einen Fügewerkstoff umfasst, der mit jeweils einem Werkstoff jeweils eines elektrisch zu kontaktierenden Anschlusspins (14, 16) identisch ist, wobei der als Batteriekontaktierung ausgebildete Verbinder (18) ein Blech (50) in Sandwichbauweise ist, welches mindestens ein Einzelblech (52) aus Material A und mindestens ein Einzelblech (54) aus Material B umfasst, **dadurch gekennzeichnet, dass** an einem Ende (56) des Blechs (50) durch einen spanabhebenden Fertigungsprozess eine Anschlussstelle (60) und an einem gegenüberliegenden Ende (58) des Blechs (50), ebenfalls durch einen spanabhebenden Fertigungsprozess, eine zweite Anschlussstelle (62) ausgebildet ist.

7. Verbinder (18) zur Kontaktierung einer Batterie (10) oder zur Verschaltung von Einzel-Batteriezellen (10) zu einem Batterie-Stack (12) nach Anspruch 6, **dadurch gekennzeichnet, dass** der als Batteriekontaktierung ausgebildete Verbinder (18) aus einem, der Fügegeometrie von mindestens zwei zu verbindenden Einzel-Batteriezellen (10) angepassten, Zweistoffblech (34) gefertigt ist.

## Claims

1. Battery stack (12) having individual battery cells (10), which are interconnected with one another by way of a connector (18), wherein the connector (18) formed as a battery contacting means is a two-phase connecting element and comprises a joining material at each end (22, 24) of the connector (18), said joining material being identical to a respective material of a respective connection pin (14, 16), which is to be electrically contacted, of an individual battery cell, wherein the connector (18) formed as a battery contacting means is a sheet (50) with a sandwich construction, which comprises at least one individual sheet (52) made of material A and at least one individual sheet (54) made of material B, **characterized in that** a connection pin (16) of the battery cell (10), produced from material A of the individual sheet (52), is plugged through an opening in the connector (18) such that a contact point (70) is formed and the connection pin (16) and the contact point (70) form a joint weld bead (72) after remelting, wherein the individual sheet (54) of the connector (18) serves as a weld bead support on a bottom side (80) of the connector (18).

2. Battery stack (12) according to Claim 1, **characterized in that** the connector (18) formed as a battery contacting means is produced from a two-phase sheet (34) that is adapted to the joining geometry of at least two individual battery cells (10) that are to be connected.

3. Battery stack (12) according to Claim 1, **characterized in that** the material from which a connection pin (16) and an individual sheet (52) are manufactured is re-molten.

4. Battery stack (12) according to Claim 1, **characterized in that** the materially bonded connection between the connection pin (16) and the individual sheet (52) along the pin contour is embodied as a seam weld.

5. Battery stack (12) according to one or more of the preceding claims, **characterized in that** a welded connection with a lap joint is formed between a connection pin (14) and a stripped area (76) on a top side (74) of the individual sheet (54), which area is produced by a machining production process.

6. Connector (18) for contacting a battery (10) or for interconnecting individual battery cells (10) to form a battery stack (12), wherein the connector (18) formed as a battery contacting means is a two-phase connecting element and comprises a joining material at each end (22, 24) of the connector (18), said joining material being identical to a respective material of a respective connection pin (14, 16), which is to be electrically contacted, wherein the connector (18) formed as a battery contacting means is a sheet (50) with a sandwich construction, which comprises at least one individual sheet (52) made of material A and at least one individual sheet (54) made of material B, **characterized in that** a connection point (60) is formed at one end (56) of the sheet (50) by way of a machining production process and a second connection point (62) is formed at an opposite end (58) of the sheet (50), likewise by way of a machining production process.

7. Connector (18) for contacting a battery (10) or for interconnecting individual battery cells (10) to form a battery stack (12) according to Claim 6, **characterized in that** the connector (18) formed as a battery contacting means is produced from a two-phase sheet (34) that is adapted to the joining geometry of at least two individual battery cells (10) that are to be connected.

## Revendications

1. Empilement de batteries (12) comprenant des cellules de batterie individuelles (10) qui sont connectées entre elles par un connecteur (18), le connecteur (18) réalisé sous la forme d'une mise en contact des batteries étant un élément de liaison binaire et comportant respectivement à une extrémité (22, 24) du connecteur (18) un matériau de jointage, lequel est identique respectivement à un matériau respectivement d'une broche de raccordement (14, 16), avec laquelle un contact électrique doit être établi, d'une cellule de batterie individuelle, le connecteur (18) réalisé sous la forme d'une mise en contact des batteries étant une tôle (50) en construction en sandwich qui comporte au moins une tôle individuelle (52) en matériau A et au moins une tôle individuelle (54) en matériau B, **caractérisé en ce qu'**une broche de raccordement (16) de la cellule de batterie (10), fabriquée dans le matériau A de la tôle individuelle (52), est insérée à travers une ouverture dans le connecteur (18), de sorte qu'un point de contact (70) est formé et la broche de raccordement (16) et le point de contact (70) forment, après une refusion, un bain de fusion (72) commun, la tôle individuelle (54) du connecteur (18) sur un côté inférieur (80) du connecteur (18) servant de sécurisation du bain de fusion.

2. Empilement de batteries (12) selon la revendication 1, **caractérisé en ce que** le connecteur (18) réalisé sous la forme d'une mise en contact des batteries est fabriqué à partir d'une tôle binaire (34) adaptée à la géométrie de jointage d'au moins deux cellules de batterie individuelles (10) à relier.

3. Empilement de batteries (12) selon la revendication 1, **caractérisé en ce que** le matériau dans lequel sont fabriquées une broche de raccordement (16) et une tôle individuelle (52) est remis en fusion.

4. Empilement de batteries (12) selon la revendication 1, **caractérisé en ce que** la liaison par fusion de matières entre la broche de raccordement (16) et la tôle individuelle (52) le long du contour de la broche est réalisée sous la forme d'une soudure en cordon.

5. Empilement de batteries (12) selon une ou plusieurs des revendications précédentes, **caractérisé en ce qu'**une liaison soudée entre une broche de raccordement (14) et une surface (76) dénudée produite par un processus de fabrication par enlèvement de copeaux sur un côté supérieur (74) de la tôle individuelle (54) est réalisée par ligne de soudure à recouvrement.

6. Connecteur (18) destiné à la mise en contact avec une batterie (10) et à la connexion de cellules de batterie individuelles (10) en un empilement de batteries (12), le connecteur (18) réalisé sous la forme d'une mise en contact des batteries étant un élément de liaison binaire et comportant respectivement à une extrémité (22, 24) du connecteur (18) un matériau de jointage, lequel est identique respectivement à un matériau respectivement d'une broche de raccordement (14, 16) avec laquelle un contact électrique doit être établi, le connecteur (18) réalisé sous la forme d'une mise en contact des batteries étant une tôle (50) en construction en sandwich qui comporte au moins une tôle individuelle (52) en matériau A et au moins une tôle individuelle (54) en matériau B, **caractérisé en ce qu'**un point de raccordement (60) est formé à une extrémité (56) de la tôle (50) par un processus de fabrication par enlèvement de copeaux et un deuxième point de raccordement (62) est formé à une extrémité opposée (58) de la tôle (50), également par un processus de fabrication par enlèvement de copeaux.

7. Connecteur (18) destiné à la mise en contact avec une batterie (10) et à la connexion de cellules de batterie individuelles (10) en un empilement de batteries (12) selon la revendication 6, **caractérisé en ce que** le connecteur (18) réalisé sous la forme d'une mise en contact des batteries est fabriqué à partir d'une tôle binaire (34) adaptée à la géométrie de jointage d'au moins deux cellules de batterie individuelles (10) à relier.
